# EUROPEAN PATENT APPLICATION

(11) **EP 4 496 169 A1**
(43) Date of publication of application: **22.01.2025**
(21) Application number: 23769473.2
(22) Date of filing: 08.02.2023
(51) Int. Cl.: H02J 7/00

(54) **BATTERY MANAGEMENT METHOD AND APPARATUS, BATTERY SYSTEM, AND COMPUTER-READABLE STORAGE MEDIUM**

(30) Priority: 15.03.2022 CN 202210253403
(71) Applicant: Contemporary Amperex Technology Co., Limited, Ningde, Fujian 352100 (CN)
(72) Inventor: CHEN, Xinwei, Ningde, Fujian 352100 (CN); LI, Xiangtao, Ningde, Fujian 352100 (CN); CAI, Jinbo, Ningde, Fujian 352100 (CN)
(74) Representative: Ran, Handong
(86) International application number: PCT/CN2023/074992
(87) International publication number: WO 2023/173962

(57) **Abstract**

The present application provides a battery management method and apparatus, a battery system, and a computer-readable storage medium. The battery system comprises: multiple battery clusters connected in parallel, the multiple battery clusters each comprise battery packs; multiple DC-DC converters, the input ends of the DC-DC converters being used for being electrically connected to a power source, the multiple DC-DC converters having one-to-one correspondence to the multiple battery clusters, the output ends of the DC-DC converters and the corresponding battery clusters being connected in series, and the multiple DC-DC converters comprising a main DC-DC converter; multiple bypass switches, the multiple DC-DC converters having one-to-one correspondence to the multiple bypass switches, and the output ends of the DC-DC converters and the corresponding bypass switches being connected in parallel; and a battery state information acquisition unit, used for acquiring battery state information of the battery clusters, and sending the battery state information of the battery clusters to the main DC-DC converter. The main DC-DC converter is used for controlling the DC-DC converters and the bypass switches on the basis of the battery state information of the battery clusters. The battery system achieves effective inter-cluster balance.

## Description

### CROSS-REFERENCE TO RELATED APPLICATIONS

This application claims priority to Chinese patent application No. 2022102534031, filed on March 15, 2022 and entitled "BATTERY MANAGEMENT METHOD AND APPARATUS, BATTERY SYSTEM, AND COMPUTER-READABLE STORAGE MEDIUM", which is incorporated herein by reference in its entirety.

### TECHNICAL FIELD

This application relates to the technical field of batteries, and more specifically, to a battery management method and apparatus, a battery system, and a computer-readable storage medium.

### BACKGROUND

In energy storage systems, when multiple battery clusters are involved, DC-DC (Direct Current-Direct Current, direct current-direct current) converters are used to implement balancing between battery clusters.

In traditional balancing schemes, DC-DC converters are directly connected in series with the corresponding battery clusters. Therefore, after the battery system is started, the DC-DC converters keep in an operating state, resulting in high system power consumption and limited control effects.

### SUMMARY

Embodiments of this application aim to provide a battery management method and apparatus, a battery system, and a computer-readable storage medium, so as to reduce system power consumption, maximize the control effect of DC-DC converters, and implement effective inter-cluster balancing.

According to a first aspect, this application provides a battery system including: multiple parallel battery clusters, where each battery cluster includes: a battery pack; multiple DC-DC converters, where an input terminal of each DC-DC converter is configured to be electrically connected to a power source, the multiple DC-DC converters are in one-to-one correspondence with the multiple battery clusters, and output terminals of the DC-DC converters are connected in series with the corresponding battery clusters; and the multiple DC-DC converters include a master DC-DC converter; multiple bypass switches, where the multiple DC-DC converters are in one-to-one correspondence with the multiple bypass switches, and the output terminals of the DC-DC converters are connected in parallel with the corresponding bypass switches; and a battery status information collection unit, where the battery status information collection unit is configured to collect battery status information of each battery cluster and send the battery status information of each battery cluster to the master DC-DC converter; and the master DC-DC converter is configured to control each DC-DC converter and each bypass switch based on the battery status information of each battery cluster.

In this application, compared with the prior art, the DC-DC converters are configured with bypass switches, so that the operation and non-operation of the DC-DC converters can be flexibly controlled by opening or closing the bypass switches, thereby reducing the system power consumption and maximizing the control effect that can be achieved by different control policies. Moreover, the DC-DC converters include a master DC-DC converter, which is equivalent to the DC-DC converters adopting a master-slave control mode. Compared with the traditional method of controlling all DC-DC converters with a main controller, this method is more flexible in both control mode and control policy, improving the adaptability of the entire battery system. Furthermore, this battery system can implement effective inter-cluster balancing.

In a possible implementation, the multiple DC-DC converters are pre-configured with codes, and the master DC-DC converter is a DC-DC converter corresponding to a maximum code or a minimum code among the multiple codes.

In this application, through configuration of codes for the multiple DC-DC converters, the master DC-DC converter can be simply and effectively determined based on the configured code.

In a possible implementation, the power source is one or more battery packs in any one of the battery clusters, and the input terminal of each DC-DC converter is connected in parallel with the power source.

In this application, the power source is one or more battery packs in any one of the battery clusters, so there is no need to connect a separate external power source, simplifying the circuit structure.

In a possible implementation, the battery status information includes: voltages of all the battery clusters before the battery system is powered on; and the master DC-DC converter is specifically configured to: determine a maximum voltage and a minimum voltage among the voltages of all the battery clusters; determine a voltage difference between the maximum voltage and the minimum voltage; under a condition that the voltage difference is less than a preset voltage, control each bypass switch to be in a closed state; under a condition that the voltage difference is greater than the preset voltage, control each bypass switch to be in an open state; and control a DC-DC converter corresponding to a battery cluster with the maximum voltage to stabilize a voltage of the battery cluster with the maximum voltage to a first voltage, and control a DC-DC converter corresponding to a battery cluster other than the battery cluster with the maximum voltage to stabilize a voltage of the battery cluster other than the battery cluster with the maximum voltage to a second voltage, the second voltage being greater than the first voltage.

In this application, through the control policy used before power-on of the battery system, loops can be avoided to maintain equal total voltages among branches (branches where battery clusters and their respective DC-DC converter are located), implementing inter-cluster voltage balancing.

In a possible implementation, the battery system further includes multiple control switches, where the multiple control switches are in one-to-one correspondence with the multiple battery clusters, and the control switches are connected in series with the corresponding battery clusters; before the battery system is powered on, each control switch is in an open state; and the master DC-DC converter is further configured to: when each battery cluster is maintained at a corresponding voltage, control each control switch to be turned on.

In this application, after it is determined that equal total voltages are maintained among the branches, that is, after inter-cluster voltage balancing is determined, the entire battery system is powered on by turning on each control switch, improving the safety of the battery system.

In a possible implementation, the battery status information includes: voltages of all the battery clusters during charging of the battery system; and the master DC-DC converter is further configured to: control each bypass switch to be in an open state; and control a DC-DC converter corresponding to a battery cluster with a maximum voltage to stabilize a voltage of the battery cluster with the maximum voltage to a first voltage, and control a DC-DC converter corresponding to a battery cluster other than the battery cluster with the maximum voltage to stabilize a current of the battery cluster other than the battery cluster with the maximum voltage to be greater than a first preset current.

In this application, during charging, through the control policy of each DC-DC converter, the battery cluster with the maximum voltage is stabilized to the first voltage, and the current of any other battery cluster is stabilized to the first preset current, implementing balancing between battery clusters in the charging state.

In a possible implementation, the battery status information includes: voltages of all the battery clusters and SOCs (State Of Charge, state of charge) of all the battery clusters during discharging of the battery system; and the master DC-DC converter is further configured to: control each bypass switch to be in an open state; control each DC-DC converter to stabilize a current of the corresponding battery cluster to be less than a first preset current; and under a condition that the SOCs of all the battery clusters are greater than a preset SOC, control each DC-DC converter to stabilize a voltage of the corresponding battery cluster to a preset voltage.

In this application, during discharging, through the control policy of each DC-DC converter, the current of each cluster is first stabilized to be less than the first preset current, and when the SOCs of all clusters are greater than the preset SOC, the voltage of each cluster is stabilized to the preset voltage, thereby implementing balancing between the battery clusters in the discharging state.

In a possible implementation, the battery status information includes: SOCs of all the battery clusters after the battery system is powered on; and the master DC-DC converter is specifically configured to: determine a maximum SOC and a minimum SOC among the SOCs of all the battery clusters; determine a SOC difference between the maximum SOC and the minimum SOC; under a condition that the SOC difference is greater than a preset SOC value, control a bypass switch corresponding to a DC-DC converter corresponding to a first target battery cluster to be in an open state; where a SOC of the first target battery cluster meets a preset SOC condition; and control the DC-DC converter corresponding to the first target battery cluster to stabilize a current of the first target battery cluster to a second preset current.

In this application, in the charging and discharging plateau region of the battery system, an excessively large inter-cluster SOC difference may be detected. In this case, the DC-DC converter corresponding to the specified battery cluster is controlled to increase or decrease the current of the specified battery cluster, so as to balance the SOCs of the clusters, thereby implementing SOC balancing between the battery clusters in the plateau region.

In a possible implementation, the master DC-DC converter is further configured to: when the SOC of each battery cluster is equal to an average SOC of all the battery clusters, control each bypass switch to be in a closed state.

In this application, when the SOC of each battery cluster is equal to the average SOC of all the battery clusters, it indicates that the SOCs of all the clusters have been balanced. In this case, each bypass switch can be closed to control the DC-DC converter to stop operating, thereby reducing system power consumption.

In a possible implementation, the battery status information further includes: whether each battery cluster meets a preset cut-off condition after the battery system is powered on; each bypass switch is in an open state; and the master DC-DC converter is specifically configured to: under a condition that it is detected that one battery cluster meets the preset cut-off condition and a voltage regulation range of a DC-DC converter corresponding to the battery cluster meets the cut-off condition, control the DC-DC converter corresponding to the battery cluster to stabilize the battery cluster to operate at a safe current.

In this application, after power-on, if one battery cluster reaches the cut-off condition and a voltage regulation range of a DC-DC converter corresponding to the battery cluster meets the cut-off condition, the battery cluster can be directly controlled to operate at a safe current, implementing effective control of safe current operation and balancing.

In a possible implementation, the master DC-DC converter is further configured to: under a condition that it is detected that one battery cluster meets the preset cut-off condition and a voltage regulation range of a DC-DC converter corresponding to the battery cluster does not meet the cut-off condition, reduce a power of each battery cluster; control a DC-DC converter corresponding to a second target battery cluster to adjust a current of the second target battery cluster to a safe current; where under a condition that the battery system is in a charging state, the second target battery cluster is a fully charged battery cluster; and under a condition that the battery system is in a discharging state, the second target battery cluster is a fully discharged battery cluster; and control a bypass switch corresponding to the DC-DC converter corresponding to the second target battery cluster to be in a closed state.

In this application, if it is detected that one battery cluster reaches the cut-off condition and a voltage regulation range of a DC-DC converter corresponding to the battery cluster does not meet the cut-off condition, the power of each battery cluster is first reduced, and then safe current control is performed, implementing effective control of safe current operation and balancing while ensuring the safety and stability of the system.

According to a second aspect, this application provides a battery management method, applied to the battery system according to the first aspect and any possible implementation of the first aspect. The battery management method includes: obtaining battery status information of each battery cluster; and controlling each DC-DC converter and each bypass switch based on the battery status information of each battery cluster.

In a possible implementation, the battery status information includes: voltages of all the battery clusters before the battery system is powered on; and the controlling each DC-DC converter and each bypass switch based on the battery status information of each battery cluster includes: determining a maximum voltage and a minimum voltage among the voltages of all the battery clusters; determining a voltage difference between the maximum voltage and the minimum voltage; under a condition that the voltage difference is less than a preset voltage, controlling each bypass switch to be in a closed state; under a condition that the voltage difference is greater than the preset voltage, controlling each bypass switch to be in an open state; and controlling a DC-DC converter corresponding to a battery cluster with the maximum voltage to stabilize a voltage of the battery cluster with the maximum voltage to a first voltage, and controlling a DC-DC converter corresponding to a battery cluster other than the battery cluster with the maximum voltage to stabilize a voltage of the battery cluster other than the battery cluster with the maximum voltage to a second voltage, the second voltage being greater than the first voltage.

In a possible implementation, the battery system further includes multiple control switches, where the multiple control switches are in one-to-one correspondence with the multiple battery clusters, and the control switches are connected in series with the corresponding battery clusters; before the battery system is powered on, each control switch is in an open state; and the battery management method further includes: when each battery cluster is maintained at a corresponding voltage, controlling each control switch to be turned on.

In a possible implementation, the battery status information includes: voltages of all the battery clusters during charging of the battery system; and the controlling each DC-DC converter and each bypass switch based on the battery status information of each battery cluster includes: controlling each bypass switch to be in an open state; and controlling a DC-DC converter corresponding to a battery cluster with a maximum voltage to stabilize a voltage of the battery cluster with the maximum voltage to a first voltage, and controlling a DC-DC converter corresponding to a battery cluster other than the battery cluster with the maximum voltage to stabilize a current of the battery cluster other than the battery cluster with the maximum voltage to be greater than a first preset current.

In a possible implementation, the battery status information includes: voltages of all the battery clusters and SOCs of all the battery clusters during discharging of the battery system; and the battery management method further includes: controlling each bypass switch to be in an open state; controlling each DC-DC converter to stabilize a current of the corresponding battery cluster to be less than a first preset current; and under a condition that the SOCs of all the battery clusters are greater than a preset SOC, controlling each DC-DC converter to stabilize the voltage of the corresponding battery cluster to a preset voltage.

In a possible implementation, the battery status information includes: SOCs of all the battery clusters after the battery system is powered on; and the controlling each DC-DC converter and each bypass switch based on the battery status information of each battery cluster includes: determining a maximum SOC and a minimum SOC among the SOCs of all the battery clusters; determining a SOC difference between the maximum SOC and the minimum SOC; under a condition that the SOC difference is greater than a preset SOC value, controlling a bypass switch corresponding to a DC-DC converter corresponding to a first target battery cluster to be in an open state; where a SOC of the first target battery cluster meets a preset SOC condition; and controlling the DC-DC converter corresponding to the first target battery cluster to stabilize a current of the first target battery cluster to a second preset current.

In a possible implementation, the battery management method further includes: when the SOC of each battery cluster is equal to an average SOC of all the battery clusters, controlling each bypass switch to be in a closed state.

In a possible implementation, the battery status information further includes: whether each battery cluster meets a preset cut-off condition after the battery system is powered on; each bypass switch is in an open state; and the controlling each DC-DC converter and each bypass switch based on the battery status information of each battery cluster includes: under a condition that it is detected that one battery cluster meets the preset cut-off condition and a voltage regulation range of a DC-DC converter corresponding to the battery cluster meets the cut-off condition, controlling the DC-DC converter corresponding to the battery cluster to stabilize the battery cluster to operate at a safe current.

In a possible implementation, the battery management method further includes: under a condition that it is detected that one battery cluster meets the preset cut-off condition and a voltage regulation range of a DC-DC converter corresponding to the battery cluster does not meet the cut-off condition, reducing a power of each battery cluster; controlling a DC-DC converter corresponding to a second target battery cluster to adjust a current of the second target battery cluster to a safe current; where under a condition that the battery system is in a charging state, the second target battery cluster is a fully charged battery cluster; and under a condition that the battery system is in a discharging state, the second target battery cluster is a fully discharged battery cluster; and controlling a bypass switch corresponding to the DC-DC converter corresponding to the second target battery cluster to be in a closed state.

For the technical effects that can be achieved by the second aspect and the implementations of the second aspect, reference can be made to the corresponding technical effects in the first aspect, and details are not repeated herein.

According to a third aspect, this application provides a battery management apparatus, applied to the battery system according to the first aspect and any possible implementation of the first aspect. The battery management apparatus includes: various functional modules configured to implement the battery management method according to the second aspect and any possible implementation of the second aspect.

According to a fourth aspect, this application provides a computer-readable storage medium, where the computer-readable storage medium stores a computer program, and when the computer program is executed by a computer, the battery management method according to the second aspect and any possible implementation of the second aspect is implemented.

### BRIEF DESCRIPTION OF DRAWINGS

To describe the technical solutions of the embodiments of this application more clearly, the following briefly describes the accompanying drawings required for describing the embodiments of this application. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of an energy storage system according to an embodiment of this application;
FIG. 2 is a schematic structural diagram of a battery system according to an embodiment of this application;
FIG. 3 is a schematic diagram of a connection relationship between a coder and DC-DC converters according to an embodiment of this application;
FIG. 4 is a coding flowchart according to an embodiment of this application;
FIG. 5 is a first schematic diagram of allowable capacity according to an embodiment of this application;
FIG. 6 is a second schematic diagram of allowable capacity according to an embodiment of this application;
FIG. 7 is a flowchart of a battery management method according to an embodiment of this application; and
FIG. 8 is a schematic structural diagram of a battery management apparatus according to an embodiment of this application.

Reference signs: 1000. energy storage system; 200. battery system; 210. battery cluster; 220. DC-DC converter; 230. bypass switch; 240. battery status information collection unit; 400. energy storage converter; 800. battery management apparatus; 810. obtaining module; and 820. processing module.

### DESCRIPTION OF EMBODIMENTS

The following describes technical solutions in embodiments of this application with reference to accompanying drawings in the embodiments of this application. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

Currently, from a perspective of market development, application of batteries is becoming more extensive. Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

In the architecture of traditional energy storage system solutions, when multiple battery clusters are involved, converters are used to implement balancing between battery clusters. Taking DC-DC converters as an example, in the existing technical solutions, DC-DC converters are directly connected in series with the corresponding battery clusters, and a main controller corresponding to the multiple DC-DC converters is configured. After the battery system starts running, the main controller controls the control policies of the multiple DC-DC converters.

The applicant has found that although this method can implement inter-cluster balancing of battery clusters, since multiple DC-DC converters are directly connected in series with the corresponding battery clusters, the DC-DC converters are arranged in the branches of the battery clusters. Then, after the battery system operates, the DC-DC converters keep in an operating state, resulting in one more level of power transmission loss, that is, resulting in high system power consumption.

Moreover, in this architecture, the multiple DC-DC converters are controlled by a separate main controller, and both the control mode and the control policy are limited, resulting in a relatively low adaptability.

After careful consideration by the applicant, regarding the issue of high system power consumption, if the multiple DC-DC converters do not directly belong to the branches where the battery clusters are located, or if the connection or disconnection of the multiple DC-DC converters can be flexibly controlled, the problem of high system power consumption caused by the continuous operation of the DC-DC converters can be avoided.

Regarding the issue of limitations in the control mode and control policy, if the multiple DC-DC converters are no longer controlled by a separate main controller but adopt a master-slave control mode, there is no need to connect a separate external main controller, which not only simplifies the circuit structure, but also improves the control flexibility.

Based on the above considerations, the applicant has designed a technical solution to reduce system power consumption, maximize the control effect of DC-DC converters, and implement effective inter-cluster balancing. In this technical solution, the architecture of the existing battery system is improved, and the control mode of the DC-DC converters is also improved.

On the one hand, in addition to being connected in series with the corresponding battery clusters, the DC-DC converters are also provided with bypass switches. The operation and non-operation of the DC-DC converters can be flexibly controlled by opening or closing the bypass switches. In this way, the DC-DC converters can be independent of the branches of the battery clusters, thereby reducing the system power consumption and maximizing the control effect that can be achieved by different control policies.

On the other hand, the multiple DC-DC converters adopt a master-slave control mode. Compared with the traditional method of controlling all DC-DC converters with a main controller, this method is more flexible in both control mode and control policy, improving the adaptability of the entire battery system.

Therefore, with the technical solution provided by the embodiments of this application, system power consumption is reduced, the control effect of the DC-DC converters is maximized, and effective inter-cluster balancing is implemented.

The technical solution provided by the embodiments of this application can be applied to energy storage systems, including but not limited to: energy storage power supply systems such as hydroelectric, thermal, wind, and solar power stations; energy storage systems for electric transportation tools such as electric bicycles, electric motorcycles, and electric vehicles; and energy storage systems in fields such as military equipment and aerospace.

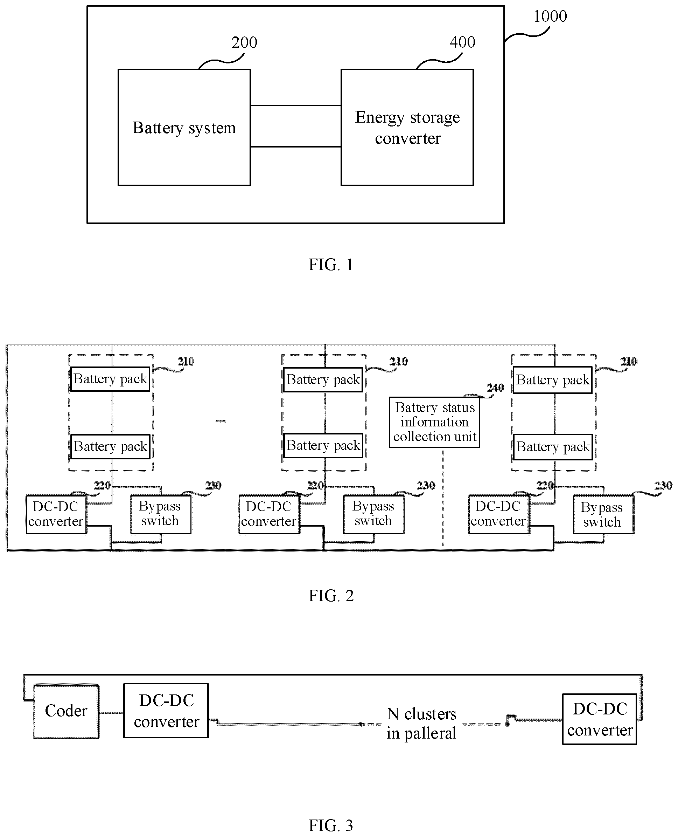

FIG. 1 is a schematic structural diagram of an energy storage system 1000 according to an embodiment of this application. The energy storage system 1000 includes: a battery system 200 and an energy storage converter 400 electrically connected to the battery system 200.

The energy storage converter 400 can control the charging and discharging processes of the battery system 200, perform alternating current-direct current conversion, and directly supply power to an alternating current load in the absence of a power grid.

In some embodiments, the energy storage converter 400 is a DC/AC energy storage converter. In some other embodiments, the energy storage converter 400 can be replaced by a load or bus DCDC.

Based on the description of the above invention concepts and application scenarios, refer to FIG. 2, which is a schematic structural diagram of a battery system 200 according to an embodiment of this application.

As shown in FIG. 2, the battery system 200 includes:
multiple parallel battery clusters 210, where each battery cluster 210 includes a battery pack;
multiple DC-DC converters 220, where an input terminal of each DC-DC converter 220 is configured to be electrically connected to a power source, the multiple DC-DC converters 220 are in one-to-one correspondence with the multiple battery clusters 210, and output terminals of the DC-DC converters 220 are connected in series with the corresponding battery clusters 210; and the multiple DC-DC converters 220 include a master DC-DC converter;
multiple bypass switches 230, where the multiple DC-DC converters 220 are in one-to-one correspondence with the multiple bypass switches 230, and the output terminals of the DC-DC converters 220 are connected in parallel with the corresponding bypass switches 230; and
a battery status information collection unit 240.

The battery status information collection unit 240 is configured to collect battery status information of each battery cluster 210 and send the battery status information of each battery cluster 210 to the master DC-DC converter. The master DC-DC converter is configured to control each DC-DC converter 220 and each bypass switch 230 based on the battery status information of each battery cluster 210.

The battery pack includes multiple batteries connected in series. The batteries may be in the form of a battery module composed of multiple battery cells connected in series, parallel, or series-parallel. Each battery cell may be a secondary battery or a primary battery; or may be a lithium-sulfur battery, a sodium-ion battery, or a magnesium-ion battery, without being limited thereto. The battery cell may be cylindrical, flat, rectangular, or of other shapes.

On the basis of multiple batteries connected in series, the battery cluster 210 may be understood as a branch formed by multiple batteries connected in series.

The DC-DC converter 220 may be an isolated DC-DC converter or a non-isolated DC-DC converter.

In the embodiment of this application, the DC-DC converter 220 includes an input terminal and an output terminal, and has the capability of positive voltage output, negative voltage output, and positive and negative voltage output.

The DC-DC converter 220 may be configured with an independent power supply, or may be powered by the corresponding battery cluster 210.

The output terminal of the DC-DC converter 220 may be connected in series with positive and negative electrodes of the corresponding battery cluster 210, or at a position between multiple batteries.

In the embodiment of this application, the multiple DC-DC converters 220 include a master DC-DC converter, and the DC-DC converter 220 other than the master DC-DC converter is a slave DC-DC converter.

In some embodiments, only one master DC-DC converters is provided. In other words, all the DC-DC converters 220 (including the master DC-DC converter itself) are controlled by this master DC-DC converter. This implementation is suitable for application scenarios with a small number of DC-DC converters 220; in other words, it is suitable for application scenarios where one DC-DC converter 220 is able to stably control multiple DC-DC converters 220.

In some other embodiments, the number of master DC-DC converters may not be limited to one. In an optional implementation, the multiple DC-DC converters 220 are grouped. For example, 20 DC-DC converters 220 are divided into 4 groups, with 5 DC-DC converters 220 in each group. Then each group includes one master DC-DC converter. For example, among the 5 DC-DC converters 220 in each group, one is the master DC-DC converter, and the others are slave DC-DC converters. This implementation is suitable for application scenarios with a large number of DC-DC converters 220; in other words, it is suitable for application scenarios where one DC-DC converter 220 may not be able to stably control multiple DC-DC converters 220.

From the different implementations of master-slave control described above, it can be learned that when the master-slave control mode is adopted, the control mode of the DC-DC converters 220 can be flexibly configured based on different application scenarios, with high adaptability.

The bypass switch 230 may be in the form of a relay, an analog switch, or the like, which is not limited in the embodiments of this application.

It can be understood that the output terminal of the DC-DC converter 220 is connected in parallel with the corresponding bypass switch 230, and the output terminal is connected in series with the corresponding battery cluster 210, which is equivalent to the bypass switch 230 being connected in series with the corresponding battery cluster 210. Then, when the bypass switch 230 corresponding to the DC-DC converter 220 is in a closed state, the bypass switch 230 is connected to the battery cluster 210 corresponding to the DC-DC converter 220, and the DC-DC converter 220 does not work. When the bypass switch 230 corresponding to the DC-DC converter 220 is in an open state, the DC-DC converter 220 is connected to the corresponding battery cluster 210, and the DC-DC converter 220 works. Moreover, even if the bypass switch 230 corresponding to the DC-DC converter 220 is in an open state, the DC-DC converter 220 may not work. For example, in no-load disconnected and sleep states, the DC-DC converter 220 is equivalent to not being connected to the corresponding battery cluster 210.

The battery status information collection unit 240 is configured to collect battery status information of each battery cluster 210. The battery status information includes but is not limited to: voltage, SOC, current, and the like.

In some embodiments, the battery status information collection unit 240 includes a BMS (Battery Management System, battery management system). In some other embodiments, the battery status information collection unit 240 is a unified module for multiple information collection units. Alternatively, the battery status information collection unit 240 may be in other forms, which is not limited herein.

In some embodiments, the battery status information collection unit 240 may be a part of the battery. Therefore, in the entire battery system 200, there may be one or more battery status information collection units 240.

The battery status information collection unit 240 may be communicatively connected to each DC-DC converter 220 through a communication line to exchange battery status information.

After the master DC-DC converter receives the battery status information of each battery cluster 210, it generates control instructions for each DC-DC converter 220 and each bypass switch 230 based on the battery status information, and each DC-DC converter 220 and each bypass switch 230 execute the corresponding control instructions.

In the embodiments of this application, different from the prior art, the DC-DC converters 220 are configured with bypass switches 230, and the operation and non-operation of the DC-DC converters 220 can be flexibly controlled by opening or closing the bypass switches 230, thereby reducing the system power consumption and maximizing the control effect that can achieved by different control policies. Moreover, the DC-DC converters 220 include a master DC-DC converter, which is equivalent to the DC-DC converters 220 adopting a master-slave control mode. Compared with the traditional method of controlling all DC-DC converters 220 with a main controller, this method is more flexible in both control mode and control policy, improving the adaptability of the entire battery system 200. Furthermore, the battery system 200 can implement effective inter-cluster balancing.

In the embodiment of this application, since the DC-DC converters 220 adopt the master-slave control mode, it is necessary to determine the master DC-DC converter in advance.

In an optional implementation, the multiple DC-DC converters 220 are pre-configured with codes, and the master DC-DC converter is a DC-DC converter 220 corresponding to a maximum code or a minimum code among the multiple codes.

In this implementation, the multiple DC-DC converters 220 can be coded first, and then the master DC-DC converter is determined based on the codes of the multiple DC-DC converters 220.

It can be understood that in addition to the DC-DC converter 220 with the maximum code or the minimum code being determined as the master DC-DC converter, another DC-DC converter 220 with a specified code can also be determined as the master DC-DC converter.

The following describes the coding method of the DC-DC converters 220.

FIG. 3 is a schematic diagram of the coding hardware architecture provided by an embodiment of this application. In FIG. 3, the DC-DC converters 220 are connected to the coder through hard wires. In some embodiments, the coder is integrated into the BMS.

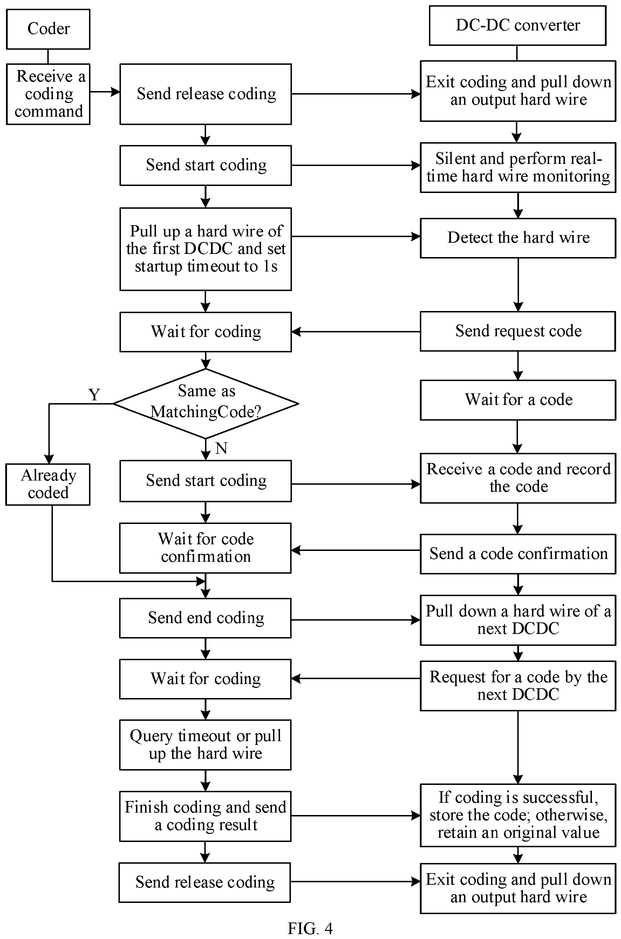

FIG. 4 is a coding flowchart according to an embodiment of this application. In FIG. 4, DCDC represents the DC-DC converter 220, and the steps on the left side are performed by the coder, and the steps on the right side are performed by the DC-DC converter 220. The coding process includes the following steps.

The coder receives a coding command and starts coding.

Code initialization: The coder sends a release coding command to the DC-DC converter 220, and the DC-DC converter 220 exits coding and pulls down an output hard wire. Coding initialization can be understood as a code reset method. Through the code initialization, a new coding process can be started, avoiding that there are other coding processes before the coding command is received.

Coding procedure: After the coder starts coding for the DC-DC converters 220, it sequentially pulls up hard wires of the DC-DC converters 220. After each DC-DC converter 220 detects that the hard wire is pulled up, it sends a request code instruction. After receiving the request code instruction, the coder configures a code for the corresponding DC-DC converter 220. After receiving the code, the DC-DC converter 220 records the code, and sends the code to the coder for confirmation. After confirming the code, the coder continues to configure a code for the next DC-DC converter 220. After the coding is successful, each DC-DC coder stores the code; otherwise, retains an original code value.

After the DC-DC converter 220 sends the request code instruction to the coder, the coder also determines whether the DC-DC converter 220 has been coded. The basis for the determination is the Matchingcode (matching code) carried in the request code instruction. If the Matchingcode is consistent with a code to be configured, it indicates that the DC-DC converter 220 has been coded; and if the Matchingcode is inconsistent with the code to be configured, it indicates that the DC-DC converter 220 has not been coded.

In addition, the coding process also involves some routine operations, such as startup timeout and query timeout, which can be flexibly set according to specific application scenarios, and are not limited herein.

Apart from the above coding method, other coding methods can also be adopted, which are not limited herein.

Regardless of the coding method used, the coding of the DC-DC converters 220 and the configuration of the master DC-DC converter are usually completed before factory delivery.

In the embodiment of this application, codes are configured for multiple DC-DC converters 220, so that the master DC-DC converter can be simply and effectively determined based on the configured codes.

In some other embodiments, the master DC-DC converter may be directly specified and configured by the vendor without the need to set codes for the DC-DC converters 220.

In the embodiment of this application, the input terminal of the DC-DC converter 220 is configured to connect to a power source. In an optional implementation, the power source is one or more battery packs in any one of the battery clusters 210, and the input terminal of each DC-DC converter 220 is connected in parallel with the power source.

In this implementation, one or more battery packs in the battery cluster 210 are used as the power source for the DC-DC converter 220. The battery cluster 210 herein may be the battery cluster 210 corresponding or not corresponding to the DC-DC converter 220.

In the embodiment of this application, the power source is one or more battery packs in any one of the battery clusters 210, so there is no need to connect a separate external power source, simplifying the circuit structure.

In some other embodiments, the power source may alternatively be an additional independent battery or battery pack, a super capacitor, a direct current bus, or the like, which is not limited herein.

The above embodiments have clearly described the implementations of the hardware architecture of the battery system 200. The following describes the implementations of the master-slave control of the battery system 200 in different application scenarios.

In a first application scenario, equal total voltages are maintained among branches before the battery system 200 is powered on. The branches herein refer to the branch of the battery cluster 210 + the branch of the DC-DC converters 220, and correspondingly, the total voltage refers to the voltage of the battery cluster 210 + the voltage of the DC-DC converters 220.

In this application scenario, the master DC-DC converter controls each DC-DC converter 220 to switch into operation (that is, the DC-DC converter 220 works) or bypass operation (that is, the DC-DC converter 220 does not work) based on the battery status information. Bypass operation means that after the DC-DC converter 220 has been operating for a period of time, if the voltage has reached a condition, the DC-DC converter 220 can stop working, thereby reducing the system power consumption.

In this application scenario, the battery system 200 is not powered on. For the battery system 200, a control switch is also configured in each battery cluster 210 branch. The control switch may be a relay. Initially, the control switch of each battery cluster 210 branch is in an open state, and the battery system 200 is not powered on. When the control switches of each battery cluster 210 branch are in a closed state, the battery system 200 is powered on.

The state control of the control switch, or the control of the control switch, can be implemented through the battery management system.

In an optional implementation, the battery status information includes: voltages of all the battery clusters 210 before the battery system 200 is powered on. The master-slave control process of the master DC-DC converter includes: determining a maximum voltage and a minimum voltage among the voltages of all the battery clusters 210; determining a voltage difference between the maximum voltage and the minimum voltage; under a condition that the voltage difference is less than a preset voltage, controlling each bypass switch 230 to be in a closed state; under a condition that the voltage difference is greater than the preset voltage, controlling each bypass switch 230 to be in an open state; and controlling a DC-DC converter 220 corresponding to a battery cluster 210 with the maximum voltage to stabilize a voltage of the battery cluster 210 with the maximum voltage to a first voltage, and controlling a DC-DC converter 220 corresponding to a battery cluster 210 other than the battery cluster 210 with the maximum voltage to stabilize a voltage of the battery cluster 210 other than the battery cluster 210 with the maximum voltage to a second voltage, the second voltage being greater than the first voltage.

In some embodiments, before the battery system 200 is powered on, each DC-DC converter 220 is awakened by a wake-up source. The wake-up source may be the battery management system, or may be other modules configured.

In this control process, after obtaining the voltages of all the battery clusters 210 from the battery status information collection unit 240, the master DC-DC converter compares the voltages of all the battery clusters 210 to determine the maximum voltage and the minimum voltage among the voltages of all the battery clusters 210; then calculates the voltage difference between the maximum voltage and the minimum voltage, and further performs master-slave control based on the voltage difference.

The preset voltage can be understood as a voltage threshold for preventing excessive loops. In different application scenarios, the preset voltage can be set to different values, for example, it can be preset based on the actual situation of the battery, the actual situation of the DC-DC converters 220, and the like. In an optional implementation, the preset voltage is 20 V.

If the voltage difference is less than the preset voltage, it indicates that this voltage difference will not cause excessive loops. In this case, the DC-DC converters 220 do not need to work, and each bypass switch 230 can be controlled to be in a closed state.

If the voltage difference is greater than the preset voltage, this voltage difference will cause excessive loops. In this case, each bypass switch 230 is controlled to be in an open state, so that each DC-DC converter 220 starts working.

In constant voltage control, the constant voltage control method for the battery cluster 210 with the maximum voltage is different from that for other battery clusters 210. The voltage of the battery cluster 210 with the maximum voltage is stabilized to the first voltage, and the voltage of any other battery cluster 210 is stabilized to the second voltage, where the second voltage is greater than the first voltage.

In an optional implementation, assuming the first voltage is Us, the second voltage can be expressed as: Us + (Umax - U), where Umax is the maximum voltage, and U is the voltage of the battery cluster 210. Us is the minimum voltage that can be output by the DC-DC converter 220, for example, 5 V.

In the embodiment of this application, the control policy used before the battery system 200 is powered on can prevent loops and maintain equal total voltages among the branches (branches where the battery clusters 210 and the respective DC-DC converters 220 are located), thereby implementing inter-cluster voltage balancing.

In an optional implementation, the battery system 200 includes multiple control switches, where the multiple control switches are in one-to-one correspondence with the multiple battery clusters 210, and the control switches are connected in series with the corresponding battery clusters 210. Before the battery system 200 is powered on, each control switch is in an open state. Thus, the control of the master DC-DC converter further includes: when each battery cluster 210 is maintained at a corresponding voltage, controlling each control switch to be turned on.

Each battery cluster 210 is maintained at the corresponding voltage, for example, the battery cluster 210 with the maximum voltage is maintained at the first voltage, and other battery clusters 210 stay at the second voltage.

In the embodiment of this application, after it is determined that equal total voltages are maintained among the branches, that is, after it is determined that the inter-cluster voltages are balanced, the entire battery system 200 is powered on by turning on each control switch, improving the safety of the battery system 200.

After each control switch is turned on, the battery system 200 is powered on. At this time, the entire battery system 200 may enter a charging or discharging state. In this case, a second application scenario is involved: the master-slave control of the master DC-DC converter during the battery charging or discharging process.

In an optional implementation, the battery status information includes: voltages of all the battery clusters 210 during charging of the battery system 200. The master-slave control process of the master DC-DC converter includes: controlling each bypass switch 230 to be in an open state; and controlling a DC-DC converter 220 corresponding to a battery cluster 210 with a maximum voltage to stabilize a voltage of the battery cluster 210 with the maximum voltage to a first voltage, and controlling a DC-DC converter 220 corresponding to a battery cluster 210 other than the battery cluster 210 with the maximum voltage to stabilize a current of the battery cluster 210 other than the battery cluster 210 with the maximum voltage to be greater than a first preset current.

In this control process, after each bypass switch 230 is opened, each DC-DC converter 220 starts working. The voltage of the battery cluster 210 with the maximum voltage is maintained at the first voltage (that is, the minimum voltage that can be output by the DC-DC converter 220, as described in the above embodiments), and the current of any other battery cluster 210 is stabilized to be greater than the first preset current.

The value of the first preset current can be configured according to different application scenarios, which is not limited herein.

In the embodiment of this application, during charging, through the control policy of each DC-DC converter 220, the battery cluster 210 with the maximum voltage is stabilized to the first voltage, and the current of any other battery cluster 210 is stabilized to the first preset current, thereby implementing inter-cluster balancing of the battery clusters 210 in the charging state.

In addition, during the charging process, if the voltage of the battery cluster 210 with the maximum voltage is stably maintained at the first voltage, and the current of any other battery cluster 210 is stabilized at greater than the first preset current, that is, after balancing between the battery clusters 210 is completed, the master DC-DC converter may further sequentially switch the corresponding DC-DC converters 220 to bypass operation, starting from the battery cluster 210 with the lowest current.

In an optional implementation, the battery status information includes: voltages of all the battery clusters 210 and SOCs of all the battery clusters 210 during discharging of the battery system 200. The master-slave control process of the master DC-DC converter includes: controlling each bypass switch 230 to be in an open state; controlling each DC-DC converter 220 to stabilize a current of the corresponding battery cluster 210 to be less than a first preset current; determining that the SOCs of all the battery clusters 210 are greater than a preset SOC; and controlling each DC-DC converter 220 to stabilize the voltage of the corresponding battery cluster 210 to a preset voltage.

In this control process, each bypass switch 230 is controlled to be in an open state to cause each DC-DC converter 220 to start working. Then, each DC-DC converter 220 is controlled to stabilize the current of the corresponding battery cluster 210 to be less than the first preset current. For the first preset current, reference may be made to the implementation of the first preset current in the charging process described above.

After the constant current control, it is determined whether the SOCs of all the battery clusters 210 are greater than the preset SOC. The preset SOC can be understood as a SOC for entering the charging and discharging plateau region of the battery system 200 and can be set according to different application scenarios.

The plateau region can be understood as an interval that the battery will experience during the charging or discharging process. When the charging or discharging enters the plateau region, the voltage changes very little or remains substantially unchanged.

If the SOCs of all the battery clusters 210 are greater than the preset SOC, it indicates that the plateau region has been reached. In this case, each DC-DC converter 220 is controlled to perform constant voltage control, that is, each DC-DC converter 220 is controlled to stabilize the voltage of the corresponding battery cluster 210 to the preset voltage. For the implementation of the preset voltage, reference may be made to the description in the above embodiments, and details are not repeated herein.

In the embodiment of this application, during discharging, through the control policy of each DC-DC converter 220, the current of each cluster is first stabilized to be less than the first preset current, and when the SOCs of all clusters are greater than the preset SOC, the voltage of each cluster is stabilized to the preset voltage, thereby implementing balancing between the battery clusters 210 in the discharging state.

In addition, during the discharging process, after the balancing between the battery clusters 210 is completed, the master DC-DC converter may further sequentially switch the corresponding DC-DC converters 220 to bypass operation, starting from the battery cluster 210 with the highest current.

In the embodiment of this application, after the charging or discharging enters the plateau region, the SOCs of the clusters may still differ; or even if the charging or discharging has not entered the plateau region, the SOCs of the clusters may also differ. Therefore, in a third application scenario, the master DC-DC converter needs to implement inter-cluster SOC balancing through master-slave control.

In an optional implementation, the battery status information includes: SOCs of all the battery clusters 210 after the battery system 200 is powered on. The master-slave control process of the master DC-DC converter includes: determining a maximum SOC and a minimum SOC among the SOCs of all the battery clusters 210; determining a SOC difference between the maximum SOC and the minimum SOC; under a condition that the SOC difference is greater than a preset SOC value, controlling a bypass switch 230 corresponding to a DC-DC converter 220 corresponding to a first target battery cluster to be in an open state; where a SOC of the first target battery cluster meets a preset SOC condition; and controlling the DC-DC converter 220 corresponding to the first target battery cluster to stabilize a current of the first target battery cluster to a second preset current.

In this control process, the master DC-DC converter obtains the SOCs of all the battery clusters 210 from the battery status information collection unit 240, compares the SOCs of all the battery clusters 210 to determine the maximum SOC and the minimum SOC, calculates the SOC difference between the maximum SOC and the minimum SOC, and further performs balancing control based on the SOC difference.

Balancing control is needed only when the SOC difference is greater than the preset SOC value. The preset SOC value can be set according to specific application scenarios and is not limited herein.

In the embodiment of this application, cluster-based adjustment can be performed for SOC balancing. To be specific, it is unnecessary to perform adjustment for all clusters, and only the SOC of the first target battery cluster needs to be adjusted.

In some embodiments, the preset SOC condition is: the top n SOCs among the SOCs of all the battery clusters 210 arranged in descending order, where n is a positive integer greater than 1, and can be determined according to the total number of battery clusters 210. For example: if the total number of battery clusters 210 is 5, n can be 2.

For example, when n is 2, the first target battery clusters are the battery clusters 210 corresponding to the maximum SOC and the next largest (second largest) SOC.

In some other embodiments, the preset SOC condition is: the difference between the maximum SOC or the minimum SOC is greater than a preset difference.

It can be understood that the preset SOC condition may alternatively be other conditions, which is not limited in the embodiments of this application.

After the bypass switch 230 corresponding to the DC-DC converter 220 corresponding to the first target battery cluster is controlled to be in an open state, the DC-DC converter 220 corresponding to the first target battery cluster starts working.

The DC-DC converter 220 corresponding to the first target battery cluster is controlled to stabilize the current of the first target battery cluster to the second preset current, implementing constant current control of the first target battery cluster.

In an optional implementation, if the current battery system 200 is in a charging state, the second preset current is expressed as: (Is - a * I0)/b * j. Is represents total current of the multiple battery clusters 210, a is the number of all battery clusters 210 except the first target battery cluster, I0 is maximum allowable current of a single cluster, b is the number of the first target battery clusters, and j is a safety margin.

In some embodiments, the safety margin is 0.95. In some other embodiments, the safety margin may be set according to the application scenario, which is not limited in the embodiments of this application.

In another optional implementation, if the current battery system 200 is in a discharging state, the second preset current is: a * j.

In the embodiment of this application, in the charging and discharging plateau region of the battery system 200, an excessively large SOC difference may be detected between clusters. In this case, the DC-DC converter 220 of the specified battery cluster is controlled to increase or decrease the current of the specified battery cluster, so as to balance the SOCs of the clusters, thereby implementing SOC balancing between the battery clusters 210 in the plateau region.

In an optional implementation, the above master-slave control process further includes: when the SOC of each battery cluster 210 is equal to an average SOC of all the battery clusters 210, controlling each bypass switch 230 to be in a closed state.

In the embodiment of this application, when the SOC of each battery cluster 210 is equal to the average SOC of all the battery clusters 210, it indicates that the SOCs of the clusters have been balanced. In this case, the DC-DC converters 220 can be controlled to stop operating by closing each bypass switch 230, thereby reducing the system power consumption.

In another embodiment, before the adjustment starts, the adjustment time of the DC-DC converter 220 is set; and when the adjustment time is reached, the DC-DC converter 220 is switched to bypass operation.

In still another embodiment, the DC-DC converter 220 can be switched to bypass operation when the SOC value of each battery cluster 210 reaches a SOC value (which can be preset) corresponding to the end of the plateau region. Since it is possible that the balancing is not completed at the end of the plateau region, this implementation can avoid the situation that effective SOC balancing is not implemented in the plateau region.

In the embodiment of this application, a fourth application scenario is also involved. At the end of charging and discharging, if the battery cluster 210 reaches a cut-off condition, the master DC-DC converter performs master-slave control to keep a single cluster running at a safe current or disconnect it while leaving other clusters charging or discharging.

In a possible implementation, the battery status information further includes: whether each battery cluster 210 meets a preset cut-off condition after the battery system 200 is powered on; each bypass switch 230 is in an open state; and the control process of the master DC-DC converter includes: under a condition that it is detected that one battery cluster 210 meets the preset cut-off condition and a voltage regulation range of a DC-DC converter 220 corresponding to the battery cluster 210 meets the cut-off condition, control the DC-DC converter 220 corresponding to the battery cluster 210 to stabilize the battery cluster 210 to operate at a safe current.

In this control process, when one cluster reaches the cut-off condition and a voltage regulation range of a corresponding DC-DC converter 220 is sufficient, safe current operation can be maintained.

Whether the cut-off condition is reached can be detected in real time by the master DC-DC converter, or detected by the battery management system and then notified to the master DC-DC converter.

The safe current can be 0 or other current values that can ensure safe operation.

In the embodiment of this application, after power-on, if a single battery cluster 210 reaches the cut-off condition and a voltage regulation range of a corresponding DC-DC converter 220 meets the cut-off condition, the battery cluster 210 can be directly controlled to operate at a safe current, thereby implementing effective control of safe current operation and balancing.

In another optional implementation, the control process further includes: under a condition that it is detected that one battery cluster 210 meets the preset cut-off condition and a voltage regulation range of a DC-DC converter 220 corresponding to the battery cluster 210 does not meet the cut-off condition, reducing a power of each battery cluster 210; controlling a DC-DC converter 220 corresponding to a second target battery cluster to adjust a current of the second target battery cluster to a safe current; where under a condition that the battery system 200 is in a charging state, the second target battery cluster is a fully charged battery cluster 210; and under a condition that the battery system 200 is in a discharging state, the second target battery cluster is a fully discharged battery cluster 210; and controlling a bypass switch 230 corresponding to the DC-DC converter 220 corresponding to the second target battery cluster to be in a closed state.

In this control process, the reducing a power of each battery cluster 210 includes: requesting, by the master DC-DC converter, the battery system 200 to reduce the power by 1/N, where N is the number of battery clusters 210 currently in operation. In the energy storage system 1000, the battery system 200 typically performs input or output based on a specified power. When one cluster does not work, it is necessary to correspondingly request a power reduction; otherwise, overcurrent in other branches may be caused. When a response to the power reduction request is received, for example, the master DC-DC converter receives a start power reduction command or information, the master DC-DC converter can control the DC-DC converter 220 corresponding to the second target battery cluster to perform safe current control.

In the safe current control, after the current of the second target battery cluster is adjusted to the safe current, the second target battery cluster is disconnected.

After the second target battery cluster is disconnected, the bypass switch 230 corresponding to the DC-DC converter 220 corresponding to the second target battery cluster is controlled to be in a closed state, and the DC-DC converter 220 is switched to bypass operation.

In the embodiment of this application, if it is detected that one battery cluster 210 reaches the cut-off condition and a voltage regulation range of a DC-DC converter 220 corresponding to the battery cluster 210 does not meet the cut-off condition, the power of each battery cluster 210 is reduced first, and then safe current control is performed, thereby implementing effective control of safe current operation and balancing while ensuring the safety and stability of the system.

Through the above master-slave control logic in different application scenarios, the following technical effects can be ultimately achieved: (1) the amount of electricity charged into each branch battery cluster 210 during charging is improved; (2) the amount of electricity discharged from each branch battery cluster 210 during discharging is improved; (3) the charging and discharging powers between the branch battery clusters 210 are coordinated to meet the total power demand of the external energy storage converter; and (4) balancing is implemented between the branch battery clusters 210 in the entire system to ensure the consistency of battery cells in the branch battery clusters 210.

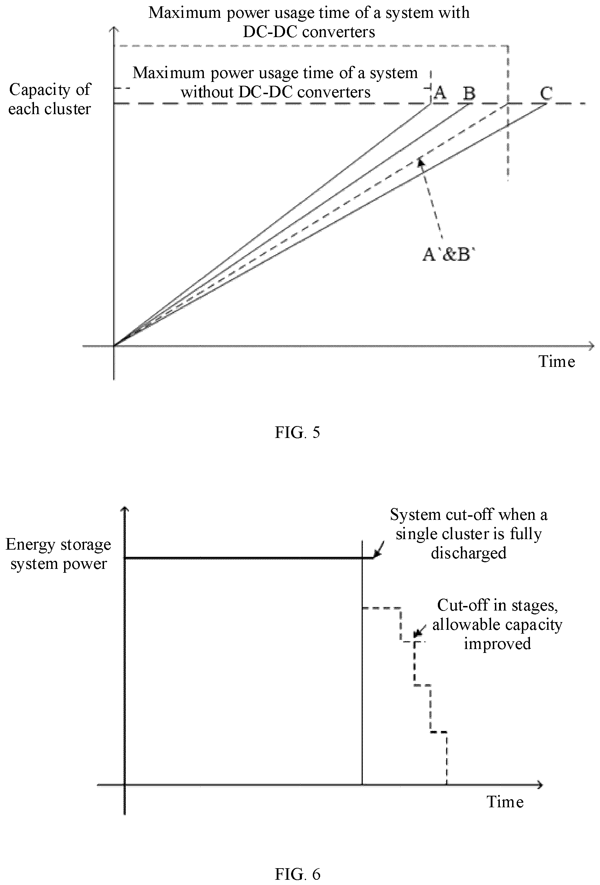

FIG. 5 is a first schematic comparison diagram of allowable capacity according to an embodiment of this application. In FIG. 5, a maximum power usage time of a battery system 200 with DC-DC converters 220 (that is, the maximum power usage time corresponding to the technical solutions of the embodiments of this application) is compared with a maximum power usage time of a battery system 200 without DC-DC converters 220. It can be seen that in the hard parallel system (the battery system 200 without DC-DC converters 220), there is a difference in the time when the capacities of battery clusters A, B, and C are used up or fully charged. When a cluster, such as battery cluster A, reaches the power reduction or cut-off condition, the entire parallel battery system 200 also reduces the power or is cut off. However, with the technical solution provided in the embodiments of this application, the battery current can be adjusted by adjusting the output voltage, so that all clusters, such as battery cluster A' and battery cluster B', can reach the power reduction or cut-off condition as simultaneously as possible, thereby increasing the maximum power usage time of the system.

FIG. 6 is a second schematic comparison diagram of allowable capacity according to an embodiment of this application. In FIG. 6, in the hard parallel system, when one battery cluster reaches the cut-off condition, the entire system also needs to be cut off. However, the technical solution provided in the embodiments of this application can keep one cluster cut off (or operating at 0 current) while allowing the remaining clusters to work normally, that is, carrying out the cut-off in stages, thereby increasing the allowable capacity.

Therefore, the technical solution provided in the embodiments of this application can achieve the following functions in the above application scenarios: 1. reducing the capacity difference between clusters in the plateau region by reducing the charging current of a single cluster or increasing the discharging current of a single cluster, thereby extending the maximum power usage time of the system; and 2. in non-plateau regions, turning off a single cluster (fully charged/fully discharged battery cluster) that reaches the cut-off condition, allowing other clusters to operate normally. The corresponding values are as follows: 1. The maximum power usage time of the energy storage system 1000 is extended (under the per-power-box configuration, more electricity can be charged when the electricity price is lowest, and more electricity can be discharged when the electricity price is highest). 2. When a single cluster is cut off, the remaining clusters can continue to be used (the originally unavailable redundant capacity becomes available).

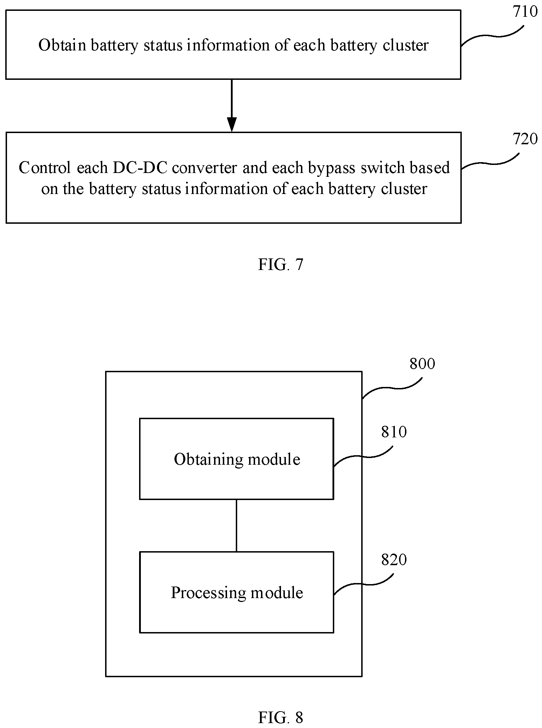

Based on the same inventive concept, referring to FIG. 7, an embodiment of this application further provides a battery management method. The battery management method is applied to the battery system 200 shown in FIG. 2, specifically to the master DC-DC converter therein. The battery management method includes the following steps.

Step 710: Obtain battery status information of each battery cluster 210.

Step 720: Control each DC-DC converter 220 and each bypass switch 230 based on the battery status information of each battery cluster 210.

In an optional implementation, step 720 includes: determining a maximum voltage and a minimum voltage among the voltages of all the battery clusters 210; determining a voltage difference between the maximum voltage and the minimum voltage; under a condition that the voltage difference is less than a preset voltage, controlling each bypass switch 230 to be in a closed state; under a condition that the voltage difference is greater than the preset voltage, controlling each bypass switch 230 to be in an open state; and controlling a DC-DC converter 220 corresponding to a battery cluster 210 with the maximum voltage to stabilize a voltage of the battery cluster 210 with the maximum voltage to a first voltage, and controlling a DC-DC converter 220 corresponding to a battery cluster 210 other than the battery cluster 210 with the maximum voltage to stabilize a voltage of the battery cluster 210 other than the battery cluster 210 with the maximum voltage to a second voltage, the second voltage being greater than the first voltage.

In an optional implementation, the battery management method further includes: when each battery cluster 210 is maintained at a corresponding voltage, controlling each control switch to be turned on.

In an optional implementation, step 720 includes: controlling each bypass switch 230 to be in an open state; and controlling a DC-DC converter 220 corresponding to a battery cluster 210 with a maximum voltage to stabilize a voltage of the battery cluster 210 with the maximum voltage to a first voltage, and controlling a DC-DC converter 220 corresponding to a battery cluster 210 other than the battery cluster 210 with the maximum voltage to stabilize a current of the battery cluster 210 other than the battery cluster 210 with the maximum voltage to be greater than a first preset current.

In an optional implementation, the battery management method further includes: controlling each bypass switch 230 to be in an open state; controlling each DC-DC converter 220 to stabilize a current of the corresponding battery cluster 210 to be less than a first preset current; and under a condition that the SOCs of all the battery clusters 210 are greater than a preset SOC, controlling each DC-DC converter 220 to stabilize the voltage of the corresponding battery cluster 210 to a preset voltage.

In an optional implementation, step 720 includes: determining a maximum SOC and a minimum SOC among the SOCs of all the battery clusters 210; determining a SOC difference between the maximum SOC and the minimum SOC; under a condition that the SOC difference is greater than a preset SOC value, controlling a bypass switch 230 corresponding to a DC-DC converter 220 corresponding to a first target battery cluster to be in an open state; where a SOC of the first target battery cluster meets a preset SOC condition; and controlling the DC-DC converter 220 corresponding to the first target battery cluster to stabilize a current of the first target battery cluster to a second preset current.

In an optional implementation, the battery management method further includes: when the SOC of each battery cluster 210 is equal to an average SOC of all the battery clusters 210, controlling each bypass switch 230 to be in a closed state.

In an optional implementation, step 720 includes: under a condition that it is detected that one battery cluster 210 meets the preset cut-off condition and a voltage regulation range of a DC-DC converter 220 corresponding to the battery cluster 210 meets the cut-off condition, controlling the DC-DC converter 220 corresponding to the battery cluster 210 to stabilize the battery cluster 210 to operate at a safe current.

In another optional implementation, the battery management method further includes: under a condition that it is detected that one battery cluster 210 meets the preset cut-off condition and a voltage regulation range of a DC-DC converter 220 corresponding to the battery cluster 210 does not meet the cut-off condition, reducing a power of each battery cluster 210; controlling a DC-DC converter 220 corresponding to a second target battery cluster to adjust a current of the second target battery cluster to a safe current; where under a condition that the battery system 200 is in a charging state, the second target battery cluster is a fully charged battery cluster 210; and under a condition that the battery system 200 is in a discharging state, the second target battery cluster is a fully discharged battery cluster 210; and controlling a bypass switch 230 corresponding to the DC-DC converter 220 corresponding to the second target battery cluster to be in a closed state.

Since the battery management method corresponds to the master-slave control function of the master DC-DC converter, for the implementations and technical effects of each step, reference may be made to the implementations and technical effects of the master-slave control process described above, and details are not repeated herein.

Based on the same inventive concept, referring to FIG. 8, an embodiment of this application further provides a battery management apparatus 800. The battery management apparatus 800 corresponds to the battery management method shown in FIG. 7 and includes: an obtaining module 810 and a processing module 820.

The obtaining module 810 is configured to obtain battery status information of each battery cluster 210; and the processing module 820 is configured to control each DC-DC converter 220 and each bypass switch 230 based on the battery status information of each battery cluster 210.

In an optional implementation, the processing module 820 is specifically configured to: determine a maximum voltage and a minimum voltage among the voltages of all the battery clusters 210; determine a voltage difference between the maximum voltage and the minimum voltage; under a condition that the voltage difference is less than a preset voltage, control each bypass switch 230 to be in a closed state; under a condition that the voltage difference is greater than the preset voltage, control each bypass switch 230 to be in an open state; and control a DC-DC converter 220 corresponding to a battery cluster 210 with the maximum voltage to stabilize a voltage of the battery cluster 210 with the maximum voltage to a first voltage, and control a DC-DC converter 220 corresponding to a battery cluster 210 other than the battery cluster 210 with the maximum voltage to stabilize a voltage of the battery cluster 210 other than the battery cluster 210 with the maximum voltage to a second voltage, the second voltage being greater than the first voltage.

In an optional implementation, the processing module 820 is further configured to: when each battery cluster 210 is maintained at a corresponding voltage, control each control switch to be turned on.

In an optional implementation, the processing module 820 is specifically configured to: control each bypass switch 230 to be in an open state; and control a DC-DC converter 220 corresponding to a battery cluster 210 with a maximum voltage to stabilize a voltage of the battery cluster 210 with the maximum voltage to a first voltage, and control a DC-DC converter 220 corresponding to a battery cluster 210 other than the battery cluster 210 with the maximum voltage to stabilize a current of the battery cluster 210 other than the battery cluster 210 with the maximum voltage to be greater than a first preset current.

In an optional implementation, the processing module 820 is further configured to: control each bypass switch 230 to be in an open state; control each DC-DC converter 220 to stabilize a current of the corresponding battery cluster 210 to be less than a first preset current; and under a condition that the SOCs of all the battery clusters 210 are greater than a preset SOC, control each DC-DC converter 220 to stabilize the voltage of the corresponding battery cluster 210 to a preset voltage.

In an optional implementation, the processing module 820 is specifically configured to: determine a maximum SOC and a minimum SOC among the SOCs of all the battery clusters 210; determine a SOC difference between the maximum SOC and the minimum SOC; under a condition that the SOC difference is greater than a preset SOC value, control a bypass switch 230 corresponding to a DC-DC converter 220 corresponding to a first target battery cluster to be in an open state; where a SOC of the first target battery cluster meets a preset SOC condition; and control the DC-DC converter 220 corresponding to the first target battery cluster to stabilize a current of the first target battery cluster to a second preset current.

In an optional implementation, the processing module 820 is further configured to: when the SOC of each battery cluster 210 is equal to an average SOC of all the battery clusters 210, control each bypass switch 230 to be in a closed state.

In an optional implementation, the processing module 820 is specifically configured to: under a condition that it is detected that one battery cluster 210 meets the preset cut-off condition and a voltage regulation range of a DC-DC converter 220 corresponding to the battery cluster 210 meets the cut-off condition, control the DC-DC converter 220 corresponding to the battery cluster 210 to stabilize the battery cluster 210 to operate at a safe current.

In another optional implementation, the processing module 820 is further configured to: under a condition that it is detected that one battery cluster 210 meets the preset cut-off condition and a voltage regulation range of a DC-DC converter 220 corresponding to the battery cluster 210 does not meet the cut-off condition, reduce a power of each battery cluster 210; control a DC-DC converter 220 corresponding to a second target battery cluster to adjust a current of the second target battery cluster to a safe current; where under a condition that the battery system 200 is in a charging state, the second target battery cluster is a fully charged battery cluster 210; and under a condition that the battery system 200 is in a discharging state, the second target battery cluster is a fully discharged battery cluster 210; and control a bypass switch 230 corresponding to the DC-DC converter 220 corresponding to the second target battery cluster to be in a closed state.

Since the battery management apparatus 800 corresponds to the battery management method, for the implementations and technical effects of each functional module, reference may be made to the implementations and technical effects of the master-slave control process described above, and details are not repeated herein.

An embodiment of this application further provides a computer-readable storage medium, where the computer-readable storage medium stores a computer program, and when the computer program is executed by a computer, the battery management method described in the above embodiments is implemented.

In the embodiments provided in this application, it should be understood that the disclosed apparatus and method may be implemented in other manners. The described apparatus embodiment is merely an example. For example, the unit division is merely logical function division and may be other division in actual implementation. For example, multiple units or components may be combined or integrated into another system, or some features may be ignored or may not be performed. In addition, the displayed or discussed mutual couplings, direct couplings or communication connections may be indirect couplings or communication connections through some communication interfaces, apparatuses or units, and may be in electrical, mechanical, or other forms.

The units described as separate parts may or may not be physically separated, and the parts displayed as units may or may not be physical units, may be located in one position, or may be distributed on a plurality of network units. Some or all of the units may be selected depending on actual requirements to achieve the objectives of the solutions of the embodiments.

In addition, each functional module in each embodiment of the application may be integrated into an independent part, each module may also independently exist, and two or more than two modules may also be integrated into an independent part.

The foregoing descriptions are merely embodiments of this application and are not intended to limit the protection scope of this application. Persons skilled in the art understand that this application may have various modifications and variations. Any modifications, equivalent replacements, and improvements made without departing from the spirit and principle of this application shall fall within the protection scope of this application.

## Claims

1. A battery system, **characterized in that**:
the battery system comprises:
multiple parallel battery clusters, wherein each battery cluster comprises: a battery pack;
multiple DC-DC converters, wherein an input terminal of each DC-DC converter is configured to be electrically connected to a power source, the multiple DC-DC converters are in one-to-one correspondence with the multiple battery clusters, and output terminals of the DC-DC converters are connected in series with the corresponding battery clusters; and the multiple DC-DC converters comprise a master DC-DC converter;
multiple bypass switches, wherein the multiple DC-DC converters are in one-to-one correspondence with the multiple bypass switches, and the output terminals of the DC-DC converters are connected in parallel with the corresponding bypass switches; and
a battery status information collection unit, wherein the battery status information collection unit is configured to collect battery status information of each battery cluster and send the battery status information of each battery cluster to the master DC-DC converter; and
the master DC-DC converter is configured to control each DC-DC converter and each bypass switch based on the battery status information of each battery cluster.

2. The battery system according to claim 1, wherein the multiple DC-DC converters are pre-configured with codes, and the master DC-DC converter corresponds to the DC-DC converter with a maximum code or a minimum code among the multiple codes.

3. The battery system according to claim 1, wherein the power source is one or more battery packs in any one of the battery clusters, and the input terminal of each DC-DC converter is connected in parallel with the power source.

4. The battery system according to claim 1, wherein:
the battery status information comprises voltages of all the battery clusters before the battery system is powered on; and
the master DC-DC converter is specifically configured to:
determine a maximum voltage and a minimum voltage among the voltages of all the battery clusters;
determine a voltage difference between the maximum voltage and the minimum voltage;
under a condition that the voltage difference is less than a preset voltage, control each bypass switch to be in a closed state;
under a condition that the voltage difference is greater than the preset voltage, control each bypass switch to be in an open state; and
control a DC-DC converter corresponding to a battery cluster with the maximum voltage to stabilize a voltage of the battery cluster with the maximum voltage to a first voltage, and control a DC-DC converter corresponding to a battery cluster other than the battery cluster with the maximum voltage to stabilize a voltage of the battery cluster other than the battery cluster with the maximum voltage to a second voltage, the second voltage greater than the first voltage.

5. The battery system according to claim 4, wherein:
the battery system further comprises multiple control switches;
the multiple control switches are in one-to-one correspondence with the multiple battery clusters, and the control switches are connected in series with the corresponding battery clusters;
before the battery system is powered on, each control switch is in an open state; and
the master DC-DC converter is further configured to:
when each battery cluster is maintained at a corresponding voltage, control each control switch to be turned on.

6. The battery system according to claim 1, wherein:
the battery status information comprises voltages of all the battery clusters during charging of the battery system; and
the master DC-DC converter is further configured to:
control each bypass switch to be in an open state; and
control a DC-DC converter corresponding to a battery cluster with a maximum voltage to stabilize a voltage of the battery cluster with the maximum voltage to a first voltage, and control a DC-DC converter corresponding to a battery cluster other than the battery cluster with the maximum voltage to stabilize a current of the battery cluster other than the battery cluster with the maximum voltage to be greater than a first preset current.

7. The battery system according to claim 1, wherein:
the battery status information comprises voltages of all the battery clusters and SOCs of all the battery clusters during discharging of the battery system; and
the master DC-DC converter is further configured to:
control each bypass switch to be in an open state;
control each DC-DC converter to stabilize a current of the corresponding battery cluster to be less than a first preset current; and
under a condition that the SOCs of all the battery clusters are greater than a preset SOC, control each DC-DC converter to stabilize a voltage of the corresponding battery cluster to a preset voltage.

8. The battery system according to claim 1, wherein:
the battery status information comprises SOCs of all the battery clusters after the battery system is powered on; and
the master DC-DC converter is specifically configured to:
determine a maximum SOC and a minimum SOC among the SOCs of all the battery clusters;
determine a SOC difference between the maximum SOC and the minimum SOC;
under a condition that the SOC difference is greater than a preset SOC value, control a bypass switch corresponding to a DC-DC converter corresponding to a first target battery cluster to be in an open state, wherein a SOC of the first target battery cluster meets a preset SOC condition; and
control the DC-DC converter corresponding to the first target battery cluster to stabilize a current of the first target battery cluster to a second preset current.

9. The battery system according to claim 8, wherein the master DC-DC converter is further configured to:
when the SOC of each battery cluster is equal to an average SOC of all the battery clusters, control each bypass switch to be in a closed state.

10. The battery system according to claim 1, wherein:
the battery status information further comprises whether each battery cluster meets a preset cut-off condition after the battery system is powered on;
each bypass switch is in an open state; and
the master DC-DC converter is specifically configured to:
under a condition that it is detected that one battery cluster meets the preset cut-off condition and a voltage regulation range of a DC-DC converter corresponding to the battery cluster meets the cut-off condition, control the DC-DC converter corresponding to the battery cluster to stabilize the battery cluster to operate at a safe current.

11. The battery system according to claim 10, wherein the master DC-DC converter is further configured to:
under a condition that it is detected that one battery cluster meets the preset cut-off condition and a voltage regulation range of a DC-DC converter corresponding to the battery cluster does not meet the cut-off condition, reduce a power of each battery cluster;
control a DC-DC converter corresponding to a second target battery cluster to adjust a current of the second target battery cluster to a safe current, wherein under a condition that the battery system is in a charging state, the second target battery cluster is a fully charged battery cluster, and under a condition that the battery system is in a discharging state, the second target battery cluster is a fully discharged battery cluster; and
control a bypass switch corresponding to the DC-DC converter corresponding to the second target battery cluster to be in a closed state.

12. A battery management method, wherein the battery management method is applied to the battery system according to any one of claims 1 to 11 and comprises:
obtaining battery status information of each battery cluster; and
controlling each DC-DC converter and each bypass switch based on the battery status information of each battery cluster.

13. The battery management method according to claim 12, wherein:
the battery status information comprises voltages of all the battery clusters before the battery system is powered on; and
the controlling each DC-DC converter and each bypass switch based on the battery status information of each battery cluster comprises:
determining a maximum voltage and a minimum voltage among the voltages of all the battery clusters;
determining a voltage difference between the maximum voltage and the minimum voltage;
under a condition that the voltage difference is less than a preset voltage, controlling each bypass switch to be in a closed state;
under a condition that the voltage difference is greater than the preset voltage, controlling each bypass switch to be in an open state; and
controlling a DC-DC converter corresponding to a battery cluster with the maximum voltage to stabilize a voltage of the battery cluster with the maximum voltage to a first voltage, and controlling a DC-DC converter corresponding to a battery cluster other than the battery cluster with the maximum voltage to stabilize a voltage of the battery cluster other than the battery cluster with the maximum voltage to a second voltage, the second voltage greater than the first voltage.

14. The battery management method according to claim 13, wherein:
the battery system further comprises multiple control switches;
the multiple control switches are in one-to-one correspondence with the multiple battery clusters, and the control switches are connected in series with the corresponding battery clusters;
before the battery system is powered on, each control switch is in an open state; and
the battery management method further comprises:
when each battery cluster is maintained at a corresponding voltage, controlling each control switch to turn on.

15. The battery management method according to claim 12, wherein:
the battery status information comprises voltages of all the battery clusters during charging of the battery system; and
the controlling each DC-DC converter and each bypass switch based on the battery status information of each battery cluster comprises:
controlling each bypass switch to be in an open state; and
controlling a DC-DC converter corresponding to a battery cluster with a maximum voltage to stabilize a voltage of the battery cluster with the maximum voltage to a first voltage, and controlling a DC-DC converter corresponding to a battery cluster other than the battery cluster with the maximum voltage to stabilize a current of the battery cluster other than the battery cluster with the maximum voltage to be greater than a first preset current.

16. The battery management method according to claim 12, wherein:
the battery status information comprises voltages of all the battery clusters and SOCs of all the battery clusters during discharging of the battery system; and
the battery management method further comprises:
controlling each bypass switch to be in an open state;
controlling each DC-DC converter to stabilize a current of the corresponding battery cluster to be less than a first preset current; and
under a condition that the SOC of each battery cluster is greater than a preset SOC, controlling each DC-DC converter to stabilize a voltage of the corresponding battery cluster to a preset voltage.

17. The battery management method according to claim 12, wherein:
the battery status information comprises SOCs of all the battery clusters after the battery system is powered on; and
the controlling each DC-DC converter and each bypass switch based on the battery status information of each battery cluster comprises:
determining a maximum SOC and a minimum SOC among the SOCs of all the battery clusters;
determining a SOC difference between the maximum SOC and the minimum SOC;
under a condition that the SOC difference is greater than a preset SOC value, controlling a bypass switch corresponding to a DC-DC converter corresponding to a first target battery cluster to be in an open state, wherein a SOC of the first target battery cluster meets a preset SOC condition; and
controlling the DC-DC converter corresponding to the first target battery cluster to stabilize a current of the first target battery cluster to a second preset current.

18. The battery management method according to claim 12, wherein the battery management method further comprises:
when the SOC of each battery cluster is equal to an average SOC of all the battery clusters, controlling each bypass switch to be in a closed state.

19. The battery management method according to claim 12, wherein:
whether each battery cluster meets a preset cut-off condition after the battery system is powered on;
each bypass switch is in an open state; and
the controlling each DC-DC converter and each bypass switch based on the battery status information of each battery cluster comprises:
under a condition that it is detected that one battery cluster meets the preset cut-off condition and a voltage regulation range of a DC-DC converter corresponding to the battery cluster meets the cut-off condition, controlling the DC-DC converter corresponding to the battery cluster to stabilize the battery cluster to operate at a safe current.

20. The battery management method according to claim 19, wherein the battery management method further comprises:
under a condition that it is detected that one battery cluster meets the preset cut-off condition and a voltage regulation range of a DC-DC converter corresponding to the battery cluster does not meet the cut-off condition, reducing a power of each battery cluster;
controlling a DC-DC converter corresponding to a second target battery cluster to adjust a current of the second target battery cluster to a safe current, wherein under a condition that the battery system is in a charging state, the second target battery cluster is a fully charged battery cluster, and under a condition that the battery system is in a discharging state, the second target battery cluster is a fully discharged battery cluster; and
controlling a bypass switch corresponding to the DC-DC converter corresponding to the second target battery cluster to be in a closed state.

21. A battery management apparatus, wherein the battery management apparatus is applied to the battery system according to any one of claims 1 to 11 and comprises:
an obtaining module configured to obtain battery status information of each battery cluster; and
a processing module configured to control each DC-DC converter and each bypass switch based on the battery status information of each battery cluster.

22. A computer-readable storage medium, wherein a computer program is stored on the computer-readable storage medium, and when the computer program is executed by a computer, the battery management method according to any one of claims 12 to 20 is implemented.
